# EUROPEAN PATENT APPLICATION

(11) **EP 2 727 774 A1**
(43) Date of publication of application: **07.05.2014**
(21) Application number: 12191081.4
(22) Date of filing: 02.11.2012
(51) Int. Cl.: B60R 19/40, B60R 19/54, B60R 19/16

(54) **A motor vehicle safety arrangement**

(71) Applicant: Autoliv Development AB, 44783 Vårgårda (SE)
(72) Inventor: Bengt, Pipkorn, 10 433 70 Sävedalen (SE)
(74) Representative: Parry, Simon James

(57) **Abstract**

A motor vehicle safety arrangement is disclosed which is operable in the event of an impact between the vehicle (1) and an external object (2). The arrangement comprises an impact guide (5) mounted to the structure of the vehicle in a front region of the vehicle. The impact guide (5) is configured for actuation from a first configuration to a second configuration in response to an actuation signal from a crash sensor. The impact guide (5) is mounted to or formed integrally with a frontal transverse beam (6) forming part of the structure of the vehicle (1), the beam (6) being located within or behind the front bumper or fender (3) of the vehicle. The impact guide (5), when in its actuated second configuration, presents a guide surface (21,22) for impact with the external object (2), the guide surface (21,22) facing outwards and extending rearwards at an acute angle relative to the central longitudinal axis (15) of the vehicle.

## Description

The present invention relates to a motor vehicle safety arrangement, and more particularly to a motor vehicle safety arrangement operable in the event of an impact between the vehicle and an external object, such as another motor vehicle, or an item of street furniture such as a lamppost or wall.

It is well known that when a motor vehicle is involved in a frontal impact with an external object such as another motor vehicle or an immovable object, significant forces are transmitted to the vehicle's structure. Considerable work has therefore been carried out on safely managing such crash forces in order to dissipate the energy involved in a crash and hence decelerate the passenger cabin of the vehicle more gradually, thereby reducing the risk of serious injury to the occupants of the vehicle. For example, all modern motor vehicles now have very carefully designed and engineered crumple zones at the front (and indeed also at the rear) which are designed to crumple upon impact with an external object, thereby absorbing crash energy.

Whilst most modern motor vehicles are carefully designed to offer good crumple zone performance in a so-called head-on frontal impact, some can be less effective in the event that the vehicle is involved in a so-called "small overlap" frontal impact or an oblique frontal impact, in which a front corner of the vehicle collides with the object or another vehicle. In these sorts of accidents, it has been found that the external object can penetrate the structure of the motor vehicle in a way which offers less than optimum absorption of the crash energy and an increased risk of injury to the vehicle occupants.

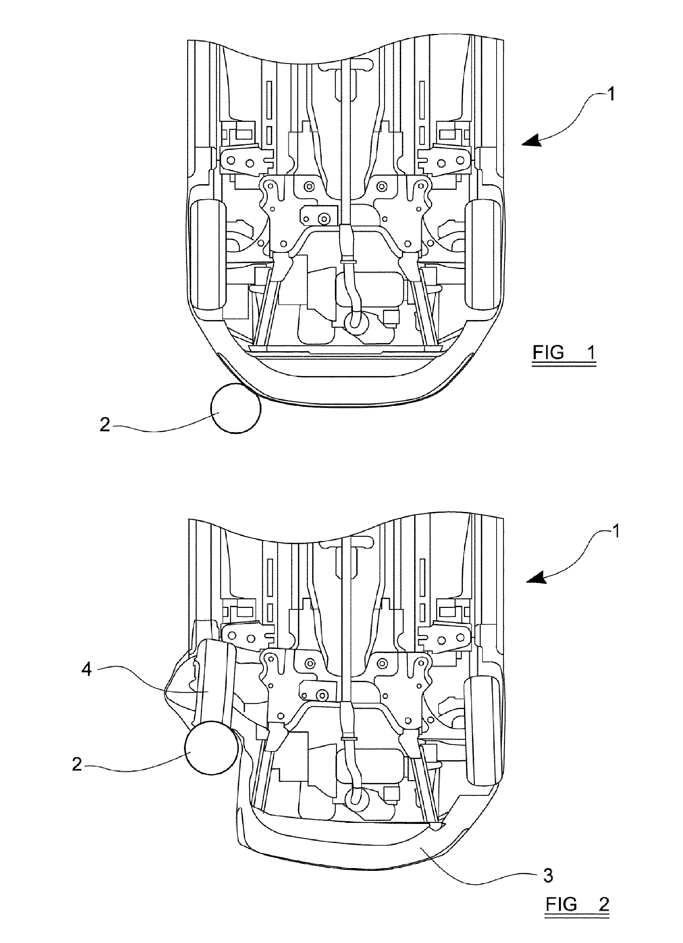

Another particular problem which has been found to arise in such impacts is where the object penetrates the bodywork and/or structure of the vehicle so as to come into contact with one of the vehicle's front wheels. When this happens, the impact between the object and the wheel can cause the wheel to be pushed inwardly towards the passenger compartment of the vehicle, and in some cases the wheel can intrude into the passenger compartment and cause significant deformation of the vehicle's A-pillar and/or toe pan structure. Figures 1 to 4 are included to illustrate this problem, and show successive stages during an impact between the front corner region of a motor vehicle 1 and an external object such as a pole 2.
Figure 1 illustrates the vehicle 1 (as viewed from below) making initial contact with the pole 2.

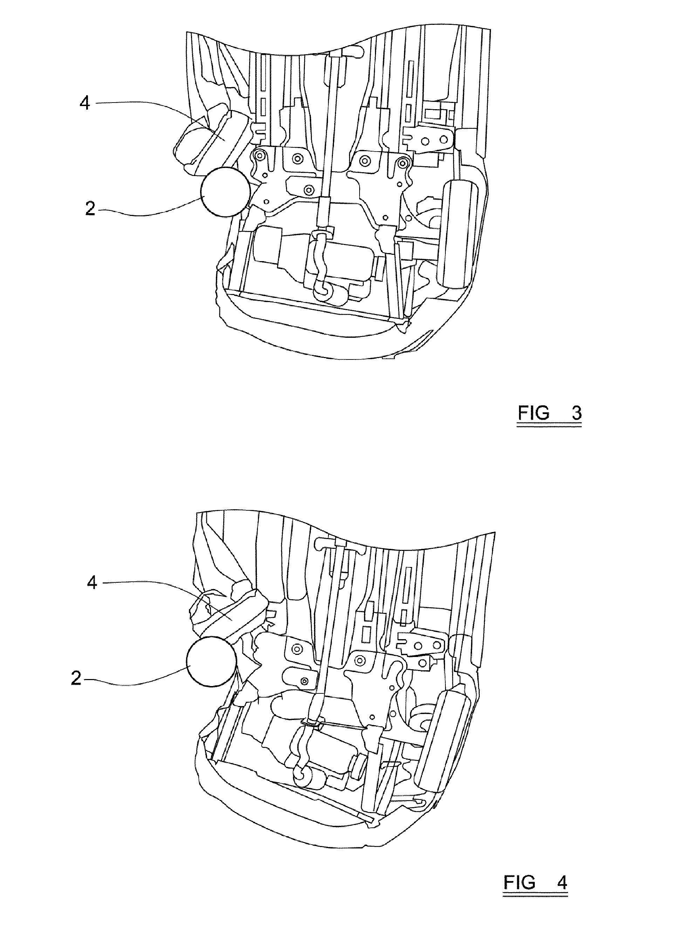

Figure 2 shows the vehicle after further movement towards the pole 2, and in particular shows the pole 2 having intruded through the front bumper or fender 3 of the vehicle so as to make contact with the front wheel 4 of the vehicle. Figures 3 and 4 show successive stages in the impact, and in particular illustrate how contact between the pole 2 and the wheel 4 can result in the wheel being pushed rearwardly and inwardly towards the passenger compartment of the vehicle, and in particular beneath the lower end of the vehicle's A-pillar. This sort of inward intrusion of the front wheel into the vehicle can represent a very significant risk to the adjacent front seat occupant of the vehicle.

It is therefore an object of the present invention to provide an improved motor vehicle safety device.

According to the present invention there is provided a motor vehicle safety arrangement operable in the event of an impact between the vehicle and an external object, the arrangement comprising: an impact guide mounted to the structure of the vehicle in a front region of the vehicle, the impact guide being configured for actuation from a first configuration to a second configuration in response to an actuation signal from a crash sensor, the safety arrangement being **characterised in that**, the impact guide is mounted to or formed integrally with a frontal transverse beam forming part of the structure of the vehicle, the beam being located within or behind the front bumper or fender of the vehicle; and wherein the impact guide, when in its actuated second configuration, presents a guide surface for impact with the external object, the guide surface facing outwards and extending rearwards at an acute angle relative to the central longitudinal axis of the vehicle.

The external object referred to above may include, without restriction, a pedestrian, a cyclist, an object of street furniture such as a pole or a post, and another vehicle (either moving or stationary).

Preferably, the impact guide comprises a guide member and a housing, the guide member being arranged for telescopic movement relative to the housing during actuation of the impact guide from said first configuration to said second configuration.

Advantageously, the housing is mounted to the frontal transverse beam of the vehicle structure.

Conveniently, the housing is formed integrally with the frontal transverse beam of the vehicle structure.

Preferably, the housing is defined by a housing region of the frontal transverse beam which telescopically receives the guide member for telescopic movement relative thereto.

Advantageously, the housing region of the frontal transverse beam defines an axis along which the guide member moves upon actuation of the safety arrangement, said axis making an acute angle to the central longitudinal axis of the vehicle such that movement of the guide member during actuation of the impact guide is outwards and rearwards relative to vehicle.

Conveniently, said housing region is defined by an end part of the transverse frontal beam, the end part making an acute angle to a central region of the beam configured to extend transversely across the vehicle.

Preferably, said guide surface is generally smooth along its entire extent.

Advantageously, actuation of the impact guide involves a component of sideways movement of at least part of the impact guide, away from the central longitudinal axis of the vehicle.

Conveniently, said impact guide is configured such that when in its second actuated configuration, part of the impact guide extends transversely past the outermost surface of the front wheel.

Preferably, said impact guide is configured such that when in its second actuated configuration, part of the impact guide extends rearwards past the forward-most surface of the front wheel.

Advantageously, said part of the impact guide is said guide member.

Conveniently, wherein upon actuation of the impact guide at least part of the impact guide extends or projects outwardly from the bumper or fender.

The safety arrangement may further comprise an actuator operably connected to a crash sensor and configured to actuate the impact guide upon receipt of a crash signal from the sensor, the actuator comprising at least one of: a pyrotechnic charge, a gas generator, or a mechanical biasing and release mechanism, and optionally being reversible or resettable.

Advantageously, the safety arrangement further comprises a crash sensor, wherein the crash sensor is either i) an impact sensor configured to detect the occurrence of an impact involving the motor vehicle, or ii) a predictive crash sensor configured to detect the likely occurrence of an impact involving the motor vehicle.

Conveniently, the safety arrangement further comprises a pair of said impact guides each said impact guide being mounted on a respective side of the motor vehicle.

So that the invention may be more readily understood, and so that further features thereof may be appreciated, an embodiment of the invention will now be described by way of example with reference to the accompanying drawings in which:
Figure 1 (discussed above) is a schematic illustration showing the front part of a motor vehicle, as viewed from below, at the instant of initial impact with an external object;
Figure 2 (discussed above) is a view corresponding generally to that of figure 1, but which shows the vehicle at a subsequent stage during the crash;
Figure 3 (discussed above) is a similar illustration showing a still further stage during the crash;
Figure 4 (discussed above) is another similar illustration showing a final stage during the crash;
Figure 5 is a perspective view of the front corner region of a motor vehicle, with its bumper/fender removed for clarity, and fitted with a safety arrangement in accordance with the present invention;
Figure 6 is a perspective view showing an impact guide of the safety arrangement in a first, unactuated configuration;
Figure 7 is a perspective view similar to that of figure 6, but showing the impact guide on a second, actuated configuration;
Figure 8 is a perspective view of the front corner region of the motor vehicle, with its bumper/fender fitted over the safety arrangement;
Figure 9 is a schematic illustration showing the motor vehicle from below, with the safety arrangement in a first, un-actuated, configuration;
Figure 10 is a view similar to that of figure 8, but which shows the safety arrangement in a second, actuated, configuration;
Figure 11 is a view similar to that of figure 5, but which shows the safety arrangement in the actuated configuration of figure 10;
Figure 12 is a view corresponding generally to that of figure 10, but which shows the safety arrangement at a subsequent stage in its actuation, and during an impact between the vehicle and an external object (not shown);
Figure 13 is a view corresponding generally to that of figure 9, but which shows the arrangement in the configuration of figure12, and which also shows the external object schematically;
Figure 14 is a view corresponding generally to that of figure 13, but which shows the arrangement at a subsequent stage during the impact with the external object;
Figure 15 is a view corresponding generally to that of figure 14, showing the arrangement at a final stage during the impact; and
Figure 16 is a perspective view showing an alternative form of impact guide in accordance with the present invention, in an actuated configuration.

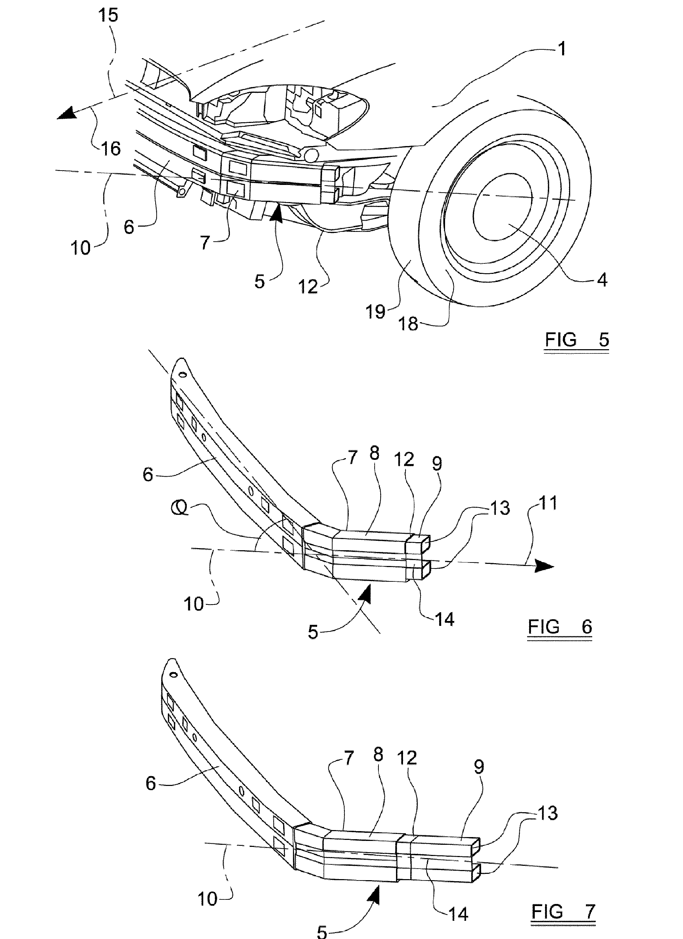

Turning now to consider figures 5 to 16, the safety arrangement of the present invention will be described in detail.

Figure 5 shows the front part of a motor vehicle 1 fitted with a safety arrangement in accordance with the invention. As will be noted, the bumper/fender of the motor vehicle is shown removed in figure 5, so that the structure of the vehicle behind the bumper/fender can be seen. The safety arrangement comprises an impact guide arrangement 5 which is mounted to the structure of the motor vehicle in front corner region of the vehicle so as to adopt a position in front of the adjacent front wheel 4. More particularly it will be noted that, as is generally conventional, the structure of the vehicle comprises a frontal transverse bumper/fender beam 6 which extends across the front of the engine compartment and behind (or within) the front bumper/fender (not shown in figure 5). It is a feature of the present invention that the impact guide 5 is either mounted to or formed integrally with the fender/bumper beam 6, and indeed in the arrangement illustrated in figure 5, the impact guide 5 is formed as part of the end structure 7 of the beam 6. The impact guide 5 is preferably mounted to the structure of the motor vehicle only via its mounting to, or formation as part of the transverse beam 6, there being no additional supporting struts or braces between the structure of the vehicle and the impact guide 5. The impact guide 5 and the transverse fender/bumper beam 6 are shown in more detail in figures 6 and 7.

The impact guide 5 of the arrangement illustrated is generally elongate and comprises an elongate housing 8 within which an elongate guide member 9 of substantially equal length is received as a close sliding fit, the guide member 9 thus being slideable relative to the housing 8 in a telescopic manner along its longitudinal axis 10, as denoted by arrow 11. Figure 6 shows the guide member 9 substantially completely received within the housing 8 via an open end 12 and thus shows the impact guide 5 in a first, unactuated, configuration. Figure 7 shows the guide member 9 partially withdrawn from the open end 12 of the housing 8 such that a length of the guide member 9 projects from the housing 8, and thus shows the impact guide in a second, actuated, configuration.

As illustrated in figures 6 and 7, the housing 8 is formed as an integral part of the transverse fender/bumper beam 6, and more particularly is actually defined by the end part 7 of the beam 6. The end part 7 of the beam, and hence the housing 8 which it defines, makes an acute angle θ to the central, generally linear, region of the beam 6 which extends transversely across the vehicle when it is fitted to the rest of the vehicle's structure as illustrated in figure 5.

It is to be appreciated that whilst the preferred embodiment illustrated comprises a guide housing 8 which is formed as an integral part of the transverse beam 6, in alternative embodiments the housing 8 can be formed as a separate component and securely mounted to the beam 6 in an otherwise similar geometry.

The housing 8 and the guide member 9 are preferably formed from metal such as, for example, steel, stainless steel or aluminium. However, it is envisaged that other high tensile materials could be used instead. Carbon reinforced composite materials can also be used.

The particular impact guide 5 illustrated in the drawings is formed such that both the housing 8 and the guide member 9 present a smooth and generally planar external surface. In particular, it will be noted that the guide member takes the form of a pair of square-sectioned rods or tubes 13 which are parallel and spaced apart from one another by an interconnecting web 14. The housing 8 is shaped so as to receive the guide member 9 as a close sliding fit, and thus has a rectangular (or optionally a generally C-shaped) cross-sectional profile. The particular configuration of the guide member 9 illustrated, comprising a pair of tubes or rods 13 interconnected by the web 14 provides an increase in its bending strength when compared to an alternative simple rectangular cross-sectional shape.

Returning now to consider figure 5, it will be noted that the impact guide 5 is mounted to the structure of the vehicle such that its longitudinal axis 10 makes an acute angle to the central longitudinal axis 15 of the vehicle, and such that its open end 12 is directed outwardly and rearwardly relative to the driving direction 16 of the vehicle.

It is proposed to provide the impact guide arrangement 5 with an actuator (not shown) which is operably (for example electronically) connected to a crash sensor (also not shown). In this regard, it is to be appreciated that the crash sensor could either be provided in the form of an impact sensor configured to detect the actual occurrence of an impact involving the motor vehicle, or could alternatively be provided in the form of a predictive "pre-crash" sensor configured to detect the likely or possible occurrence of an impact involving the motor vehicle.

The actuator is arranged to receive a signal from the or each sensor in the event that a crash or likely crash involving the motor vehicle is detected, and thereupon to actuate the impact guide 5 so as to drive its guide member 9 from its initial retracted position illustrated in figures 5 and 6, in which it is housed substantially completely within the housing 8 of the fender/bumper 6, outwardly and rearwardly along its axis 10 as denoted by arrow 11 in figure 6, towards an actuated configuration in which it extends from the open end 12 of the housing 8 as illustrated in figure 7. This linear displacement of the guide member 9 upon actuation, which will be described in more detail hereinafter, can be achieved in a number of different ways. One possibility is for the actuator to comprise a pyrotechnic charge, for example in the form of a squib, which is provided within the cavity of the fender/bumper 6 and ignited upon receipt of an actuation signal, and which then serves to drive the guide member 9 in its rearward and outward direction 11 relative to the housing 8 defined by the fender/bumper in the manner of a piston. The actuator could furthermore comprise a gas generator arranged to be triggered by ignition of the pyrotechnic charge to direct a high pressure flow of gas into the inner cavity of the fender/bumper 6, in the region of the housing 8 and hence drive the guide member 9 in direction 11. It is to be appreciated, however, that other forms of actuator arrangements could be used instead such as, for example, mechanical arrangements which may comprise a biasing mechanism (for example comprising one or more springs) arranged to urge the guide member 9 towards its actuated position, and a release mechanism arranged to initially retain the guide member 9 in its retracted position but to release it for movement under the action of the biasing mechanism upon actuation. The actuator arrangement may be configured to be reversible or resettable after actuation.

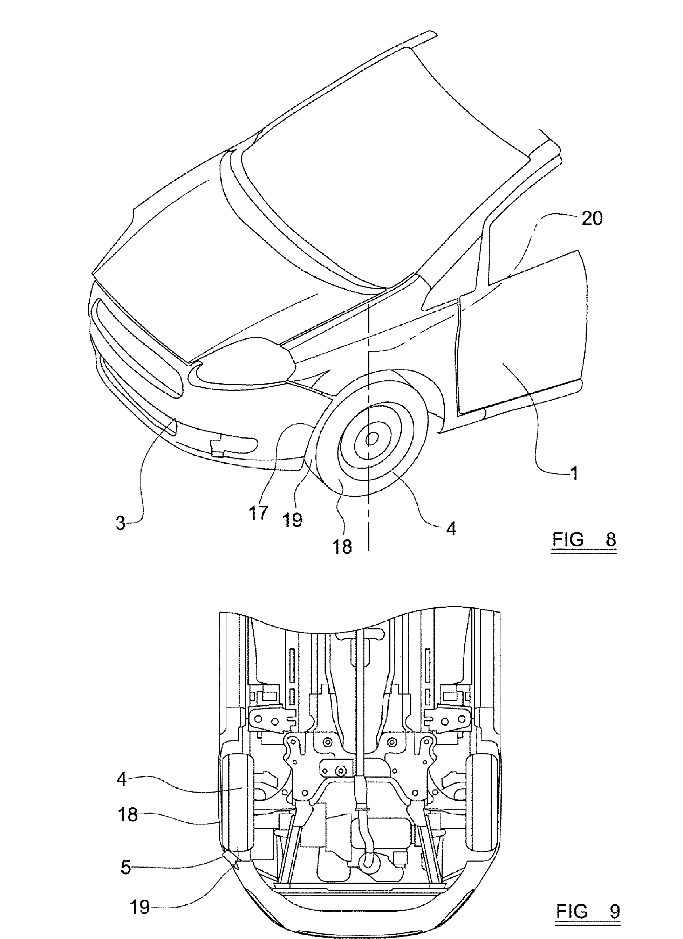

Figure 8 shows the vehicle 1 with its front bumper/fender 3 replaced. It can thus be seen that the impact guide arrangement 5 is mounted the structure of the vehicle in such a manner as to be located behind or within the bumper/fender 3,along with the transverse beam 6, and in particular behind a side part of the bumper/fender, just in front of the front wheel arch 17.

Figure 9 shows the vehicle 1 as viewed from below, and in particular shows the initial position of the outer end of the impact guide 5 in its unactuated configuration. As will be noted from figure 9, and also from figure 5, in its unactuated configuration, the outer and rearmost end of the impact guide (effectively defined by the end of the guide member 9 which is initially substantially aligned with the open end 12 of the housing 8) is provided in substantial alignment, or slightly inward of the outermost surface 18 of the front wheel 4. In this context it is relevant to note that the term "wheel" is used herein to refer collectively to both the tyre and the metal rim on which the tyre is mounted. Furthermore, the outer and rearmost end of the impact guide 5 is also spaced slightly in front of the forward-most surface 19 of the wheel 4. This ensures that the wheel is free to rotate about its rotational axis, and also to be steered about a vertical axis (denoted 20 in figure 8) without touching or being in any way impeded by the impact guide 5. Nevertheless, the outer end of the impact guide 5 can be considered to lie proximate to the wheel 4 in its unactuated configuration.

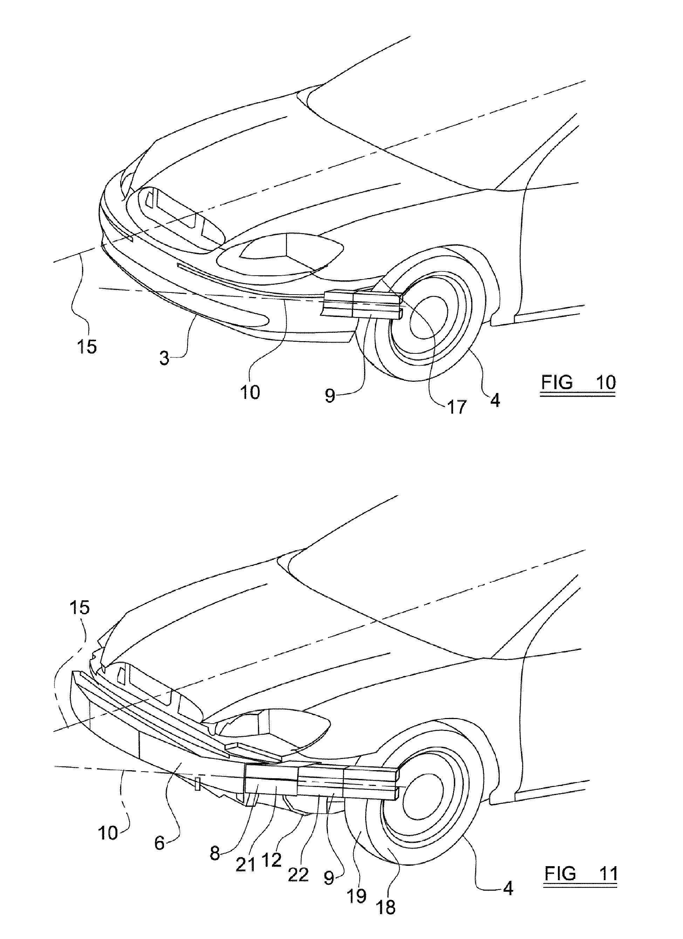

Turning now to consider figures 10 and 11, the safety arrangement of the invention is shown after an initial stage of deployment following actuation. As can be seen, actuation of the impact guide 5 is effective to drive the guide member 9 outwardly and rearwardly relative to the vehicle, along its axis 10 so that it extends outwardly from the open end 12 of the housing 8. Because of the angle at which the impact guide 5, and in particular its housing 8 is mounted to the structure of the vehicle, actuation of the impact guide 5 in this manner results in the guide member 9 extending transversely past the outermost surface 18 of the wheel 4 thereby effectively widening the frontal extent of the vehicle, and also rearwards past the forward-most surface19 of the wheel 4.

As shown in figure 10, when the guide member 9 is driven outwardly and rearwardly in this manner it projects outwardly from the bumper/fender 3. In some arrangements it is proposed that the guide member 9 will be driven so as to extend outwardly through the gap defined between the wheel arch part 17 of the bumper and the front wheel 4. In other arrangements, the bumper/fender 3 may be provided with an opening (not shown, but for example disguised as an air inlet or vent opening) through which the guide member 9 may extend when actuated. In each of these proposals, actuation of the impact guide 5 will not, in itself, damage the fender/bumper 3 which is advantageous in the event of a false actuation not involving an impact or crash. However, in other arrangements, the impact guide and the bumper/fender may be arranged so that the guide member 9 punctures or otherwise deforms and/or ruptures the bumper/fender 3 as it is driven outwardly upon actuation.

As illustrated most clearly in figure 11, and remembering that the bumper/fender 3, on account of typically being formed from relatively flexible plastic material, is very easily deformed and/or fractured upon impact with an external object in a crash, the deployed impact guide 5 serves to provide a barrier in front of the front wheel 4 of the vehicle to protect the wheel from impact with the external object in the manner described in the introduction with reference to figures 1 to 4. Furthermore, both the housing 8 defined by the fender/bumper beam 6 and the extended guide member 9 present respective smooth guide surfaces 21, 22 for sliding impact with the external object, the guide surfaces being free of any projections or discontinuities which might represent an impediment to the smooth sliding movement of the external object along them. As will be noted, the guide surface 22 defined by the extended guide member 9 effectively forms an extension of the guide surface 21 defined by the housing 8 of the beam 6. Both guide surfaces 21, 22 thus face outwards and extend rearwards at an acute angle relative to the central longitudinal axis 15 of the vehicle.

It is preferable for the guide member 9 to move into the actuated position illustrated in figure 11 (i.e. extending transversely and rearwardly past the front outer edge of the wheel 4) before the external object 2 penetrates or deforms the bumper/fender 3 so as to make contact with the impact guide 5. In arrangements where a so-called "pre-crash" sensor is used to provide the actuating signal upon detection of a likely crash being about to occur, it is even possible via swift actuation of the impact guide 5 to move the guide member 9 to this actuated position before the object 2 even makes contact with the bumper/fender 3.

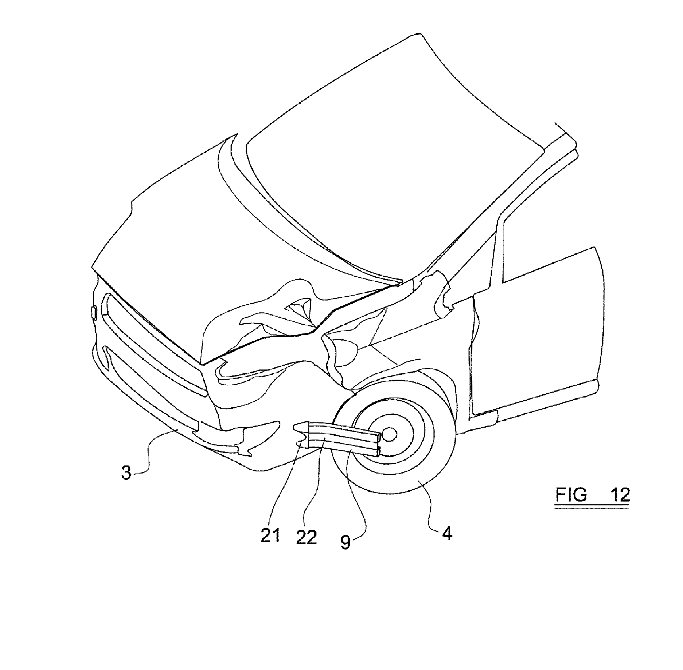

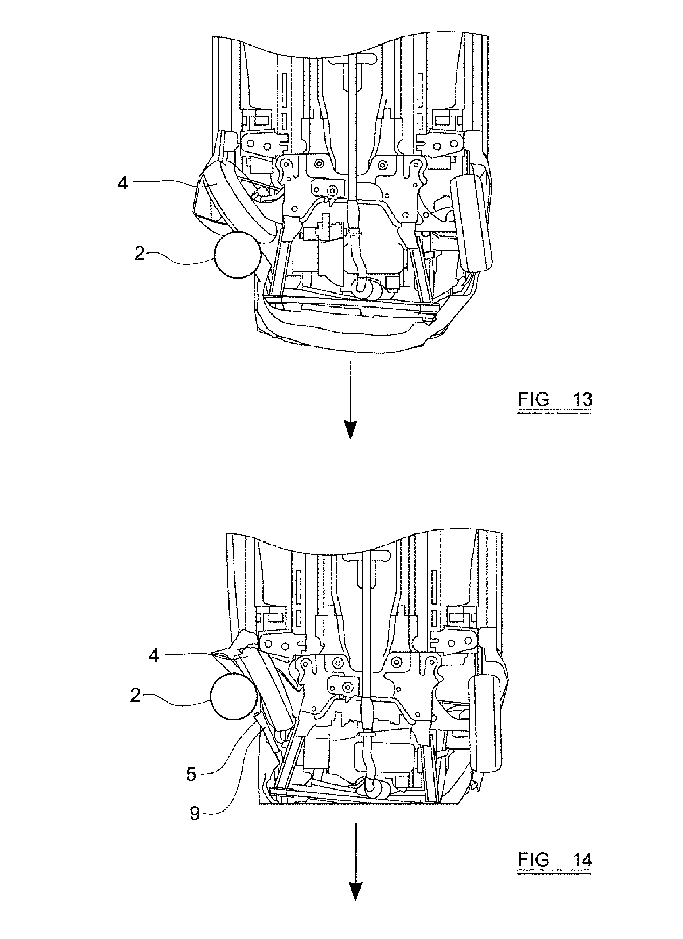

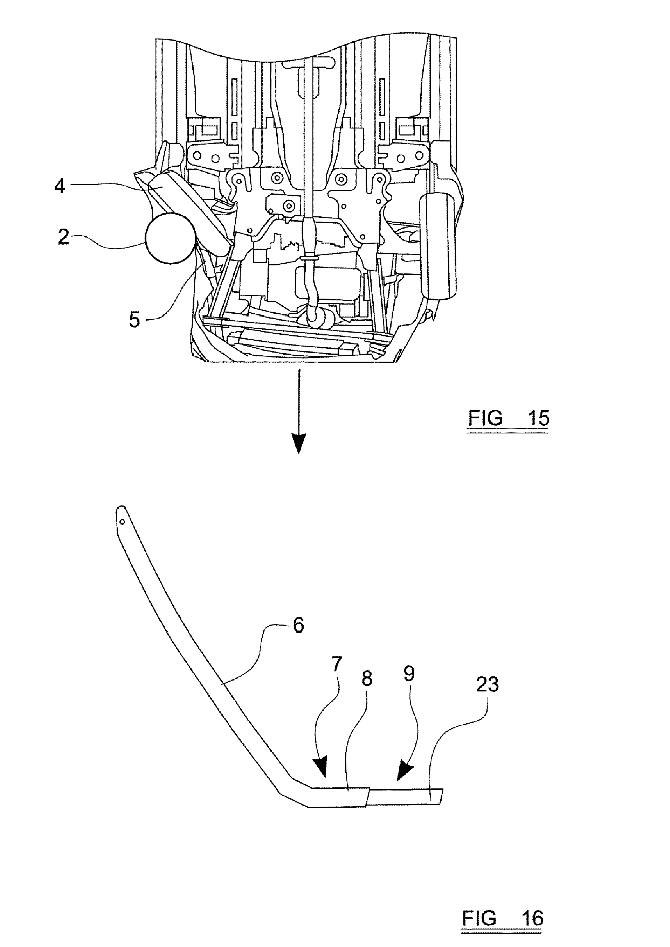

Turning now to consider figures 12 to 15, the effect of the impact guide 5 in a frontal impact with an external object such as a pole or lamppost 2 will now be described. Figures 12 and 13 illustrate the arrangement at a first instant during impact with the object 2 (although the object itself is not shown in figure 12 for purposes of clarity), whilst figures 14 and 15 each show subsequent instants during the impact. As will be appreciated, the impact depicted is representative of a so-called "small overlap" frontal impact in which the object is struck to one side of the vehicle's central longitudinal axis.

Figure 12 shows the function of the impact guide 5 particularly clearly. This drawing shows the guide member 9 having been extended a little further outwardly from the housing 8 than depicted in figures 10 and 11, and thus represents the substantially fully deployed position of the guide member 9. As will thus be noted, in this fully deployed configuration the guide member 9 extends even further rearwardly past the front of the wheel 4 and outwardly past the side of the wheel.

Figure 13 depicts the stage of impact between the vehicle 1 and the external object 2, and it can thus be seen from this drawing that the object has penetrated the side part of the front bumper/fender 3. However, the impact guide 5, in its extended condition, presents a barrier to the encroaching external object 2 during the impact.. Indeed, as will be appreciated from figure 12 in particular, as the object penetrates the side part of the front bumper/fender 3, it will make contact with the housing 8 of the guide member 5 which will thus become deformed at this stage of the crash. The housing 8 thus already absorbs considerable energy from the crash during this deformation.

As the impact guide 5 is deformed in this way, it moves towards and makes contact with the front wheel 4, effectively forming a bridge spanning the gap between the end of the fender/bumper beam 6 defining the housing 8 and the wheel 4 Because of the way in which the extended guide member 9 extends outwardly and rearwardly past the front edge of the wheel 4, the front of wheel is prevented from moving outwardly, whilst the external object 2 is prevented from passing inside the front edge of the wheel between the wheel and the structure of the vehicle by the barrier presented by the impact guide. Indeed, as illustrated most clearly in figure 13, the front region of the wheel 4 is instead urged inwardly towards the structure of the vehicle by contact with the deforming impact guide 5, which means that the rear part of the wheel is urged outwardly, away from the passenger compartment and the region of the vehicle structure at the base of the vehicle's A-pillar. This inward turning of the front region of the wheel can also provide an advantageous change in the dynamic of the moving vehicle in the crash, improving its tendency to move past the object in a glancing manner. In contrast to the crash scenario depicted in figures 1 to 4, it can thus be seen that the impact guide 5 serves to prevent the wheel 4 from penetrating the passenger compartment of the vehicle.

As can also be appreciated from figure 12 in particular, the outward and rearward angle at which the impact guide 5 is mounted to the vehicle means that when it is contacted by an external object 2 in this sort of crash, its forwardly facing and outwardly extending guide surfaces 21, 22, even if deformed as described above, serve to guide the object 2 outwardly relative to the central axis of the vehicle and past the front wheel 4. Because the guide surfaces 21, 22 are smooth along their length, the object 2 will not snag or become caught on the impact guide 5 as it slides across the guide surfaces 21, 22. This guiding of the object 2 is also shown in figures 14 and 15 which show subsequent stages during the crash. Figures 14 and 15 also show in further detail how the impact guide 5 has prevented the object 2 from driving the front wheel 4 inwardly and rearwardly towards the passenger compartment of the vehicle. It is also to be appreciated that the sliding surface defined between the beam 6 and the front wheel 4 minimizes the energy absorbed by the structure of the vehicle in an impact of the type described.

Whilst the invention has been described above with reference to a specific embodiment, it is to be appreciated that various modifications could be made to the arrangement without departing from the scope of the present invention. For example, whilst the guide member 9 of the above-described embodiment has a cross-sectional profile defined by a pair or rods or tubes 14 and in interconnected web 15, alternative cross-sectional profiles are also possible. For example, figure 16 illustrates a possible alternative in which the guide member 9 has a smaller and less complicated cross-sectional profile, and basically comprises a simple rod or tube 23. As will be appreciated, in this arrangement the cross-sectional profile of the housing 8 defined by the end 7 of the transverse beam 6 is complimentary so as to retain a close-sliding relationship between the guide member 9 and the housing 8.

Furthermore, it is to be appreciated that whilst the invention has been described in detail above with specific reference only to one impact guide 5, it is envisaged that in most installations, the safety arrangement will comprise two such impact guides 5; each being provided at a respective end of the transverse fender/bumper beam 6 on a respective side of the vehicle and for actuation is an identical manner. In such an arrangement, it is proposed that the two impact guide arrangements will be configured for simultaneous actuation. However, in variants of the invention in which the sensor is capable of determining on which side of the vehicle an impact occurs, it may be possible to arrange the impact guide arrangements for independent actuation.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A motor vehicle safety arrangement operable in the event of an impact between the vehicle (1) and an external object (2), the arrangement comprising: an impact guide (5) mounted to the structure of the vehicle in a front region of the vehicle, the impact guide (5) being configured for actuation from a first configuration to a second configuration in response to an actuation signal from a crash sensor, the safety arrangement being **characterised in that**, the impact guide (5) is mounted to or formed integrally with a frontal transverse beam (6) forming part of the structure of the vehicle (1), the beam (6) being located within or behind the front bumper or fender (3) of the vehicle; and wherein the impact guide (5), when in its actuated second configuration, presents a guide surface (21,22) for impact with the external object (2), the guide surface (21,22) facing outwards and extending rearwards at an acute angle relative to the central longitudinal axis (15) of the vehicle.

2. A safety arrangement according to claim 1, wherein the impact guide (5) comprises a guide member (9) and a housing (8), the guide member (9) being arranged for telescopic movement relative to the housing (8) during actuation of the impact guide (5) from said first configuration to said second configuration.

3. A safety arrangement according to claim 2, wherein said housing (8)is mounted to the frontal transverse beam (6) of the vehicle structure.

4. A safety arrangement according to claim 2, wherein said housing (8) is formed integrally with the frontal transverse beam (6) of the vehicle structure.

5. A safety arrangement according to claim 2 or claim 4, wherein said housing (8) is defined by a housing region (7) of the frontal transverse beam (6) which telescopically receives the guide member (9) for telescopic movement relative thereto.

6. A safety arrangement according to claim 5, wherein the housing region (7) of the frontal transverse beam (6) defines an axis (10) along which the guide member (9) moves upon actuation of the safety arrangement, said axis (10) making an acute angle to the central longitudinal axis (15) of the vehicle such that movement of the guide member (9) during actuation of the impact guide (5) is outwards and rearwards relative to vehicle (1).

7. A safety arrangement according to claim 5 or claim 6, wherein said housing region is defined by an end part (7) of the transverse frontal beam (6), the end part (7) making an acute angle (θ) to a central region of the beam (6) configured to extend transversely across the vehicle (1).

8. A safety arrangement according to any preceding claim, wherein said guide surface (21,22) is generally smooth along its entire extent.

9. A safety arrangement according to any preceding claim, wherein actuation of the impact guide (5) involves a component of sideways movement of at least part (9) of the impact guide, away from the central longitudinal axis (15) of the vehicle.

10. A safety arrangement according to any preceding claim, wherein said impact guide (5) is configured such that when in its second actuated configuration, part (9) of the impact guide extends transversely past the outermost surface (18) of the front wheel (4).

11. A safety arrangement according to claim 10, wherein said impact guide (5) is configured such that when in its second actuated configuration part (9) of the impact guide extends rearwards past the forward-most surface (19) of the front wheel (4).

12. A safety arrangement according to claim 10 or claim 11 as dependent upon any one of claims 2 to 7, wherein said part of the impact guide is said guide member (9).

13. A safety arrangement according to any preceding claim, wherein upon actuation of the impact guide (5) at least part (9) of the impact guide extends or projects outwardly from the bumper or fender (3).

14. A safety arrangement according to any preceding claim, further comprising an actuator operably connected to a crash sensor and configured to actuate the impact guide (5) upon receipt of a crash signal from the sensor, the actuator comprising at least one of: a pyrotechnic charge, a gas generator, or a mechanical biasing and release mechanism, and optionally being reversible or resettable.

15. A safety arrangement according to any preceding claim, further comprising a crash sensor, wherein the crash sensor is either i) an impact sensor configured to detect the occurrence of an impact involving the motor vehicle, or ii) a predictive crash sensor configured to detect the likely occurrence of an impact involving the motor vehicle.
